# EUROPÄISCHE PATENTSCHRIFT

(11) **EP 3 227 212 B1**
(45) Veröffentlichungstag und Bekanntmachung des Hinweises auf die Patenterteilung: **07.08.2019**
(21) Anmeldenummer: 15813030.2
(22) Anmeldetag: 15.12.2015
(51) Int. Cl.: B65G 54/02, A22C 17/00, B26D 7/18, B26D 7/32, B65B 25/06

(54) **VERSCHMUTZUNGSSCHUTZ BEI TRANSPORT VON LEBENSMITTELPORTIONEN**
CONTAMINATION PROTECTION DURING TRANSPORT OF FOOD PORTIONS
PROTECTION CONTRE LES SOUILLURES LORS DU TRANSPORT DE PORTIONS DE PRODUITS ALIMENTAIRES

(30) Priorität: 18.12.2014 DE 102014118965
(43) Veröffentlichungstag der Anmeldung: 11.10.2017
(73) Patentinhaber: Weber Maschinenbau GmbH Breidenbach, 35236 Breidenbach (DE)
(72) Erfinder: BURK, Alexander, 35232 Dautphetal (DE); ECKHARDT, Christoph, 35236 Breidenbach (DE); GERLACH, Jochen, 35232 Dautphetal (DE); NICHAU, Marco, 57334 Bad Laasphe (DE); NISPEL, Thomas, 35232 Dautphetal (DE); ROTHER, Ingo, 35236 Breidenbach (DE); VON KEUDELL, Leopold, 88682 Salem (DE); ZECHER, Steffen, 35460 Staufenberg (DE)
(74) Vertreter: Manitz Finsterwald Patent- und Rechtsanwaltspartnerschaft mbB
(86) Internationale Anmeldenummer: PCT/EP2015/079878
(87) Internationale Veröffentlichungsnummer: WO 2016/096910

(56) Entgegenhaltungen:
- EP-A1- 0 496 046
- EP-A1- 1 123 886
- EP-A1- 1 530 541
- EP-A1- 2 746 165
- DE-A1- 2 548 489
- DE-A1- 3 711 688
- DE-A1- 19 914 707
- DE-A1-102007 047 000
- DE-U1-202008 009 280
- JP-A- H0 551 087
- JP-A- 2014 024 665
- US-A- 6 009 992

## Beschreibung

Die Erfindung betrifft eine Vorrichtung zum Bewegen von Portionen, die jeweils wenigstens eine von einem Lebensmittelprodukt, insbesondere Wurst, Käse, Schinken, Fleisch oder dergleichen, abgetrennte Scheibe umfassen. Die Scheiben können insbesondere mittels einer Aufschneidevorrichtung, vorzugsweise eines Hochgeschwindigkeits-Slicers, abgetrennt werden.

Die Vorrichtung umfasst eine Mehrzahl individuell bewegbarer Transportmover zum Transport von Portionen, ein Bahnsystem für die Transportmover, in welchem die Transportmover entlang wenigstens einer vorgegebenen Bahn in einer Transportrichtung bewegbar sind, und eine Steuereinrichtung zum Steuern der Bewegung der Transportmover in dem Bahnsystem. Die Transportmover umfassen jeweils zumindest einen mit dem Bahnsystem zusammenwirkenden Läufer und wenigstens einen am Läufer angebrachten Träger für Portionen. Der Träger kann als Tray einer Verpackung ausgebildet sein oder einen Tray einer Verpackung umfassen. Alternativ kann der Träger auch einen Tray aufnehmen oder Portionen unmittelbar, d.h. ohne Tray, aufnehmen. Der Antrieb für die Transportmover kann beispielsweise als Linearmotor ausgebildet sein, insbesondere als linearer Synchronmotor oder als linearer Induktionsmotor.

Derartige Linearmotoren sind im Zusammenhang mit einer Vielzahl von Anwendungen grundsätzlich bekannt. Von Vorteil ist ein derartiges Antriebsprinzip unter anderem dann, wenn vergleichsweise geringe Lasten zu transportieren sind, wie es in dem hier in Rede stehenden Bereich des Transports von Lebensmittelportionen der Fall ist.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transportmover im Bahnsystem verwendet die vorstehend erwähnte Firma MagneMotion Inc. eine Technik, bei der jeder Transportmover mit einem Transducer versehen ist, der in den vom Bahnsystem gebildeten Stator ein Signal induziert, wodurch es der Steuereinrichtung ermöglicht wird, die exakte Position des Transportmovers mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportmovern auftreten. So kann ein Transportmover nur dann in das nächste Bahnelement einfahren, wenn dies von der Steuereinrichtung gestattet wird, was insbesondere dann nicht der Fall ist, wenn sich ein anderer Transportmover in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Vorzugsweise ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Das Transportsystem weist eine Mehrzahl von Transportmovern auf, deren Gesamtanzahl von der jeweiligen Anwendung abhängig ist. Es kann vorgesehen sein, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Portionen zu transportieren und gegebenenfalls Zusatzfunktionen durchzuführen wie z.B. eine Pufferung, ein Verteilen und/oder ein Zuordnen von Portionen.

Bisherige Bahnsysteme sind vergleichsweise verschmutzungsempfindlich. So können beispielsweise Schneidreste oder Schneidabfälle, welche beim Aufschneiden oder eventuell während der Handhabung der Portionen im Bahnsystem entstehen, auf die Bahn gelangen. Schneidreste bzw. -abfälle, welche sich auf der Bahn befinden, bergen möglicherweise ein hygienisches Risiko. Ferner kann sich die Bahn mit Ablagerungen zusetzen und so die Bewegungsfreiheit der Transportmover auf der Bahn einschränken. Neben Verschmutzungen sind auch Fehlportionen unerwünscht, welche vom Gewicht, von der Scheibenanzahl und/oder vom Ablagebild nicht dem Sollzustand entsprechen. Fehlportionen können bisher, wenn überhaupt, lediglich aufwendig, z.B. mit Hilfe von Robotergreifern, aus dem Bahnsystem entfernt werden. Man möchte aber bereits in diesen Übergabebereichen möglichst nur Gut-Portionen und für die nachgeordnete Verpackungsmaschine möglichst nur vollständige Formatsätze haben, um Leerpackungen zu vermeiden.

Eine Vorrichtung für den Transport von Lebensmittelportionen gemäß dem Oberbegriff des Anspruchs 1 lehren die Druckschriften DE 10 2007 047000 A1, JP H05 51087 A und JP 2014 024665 A.

Es ist daher eine Aufgabe der Erfindung, eine Bewegungsvorrichtung dahingehend zu verbessern, dass auf einfache Weise Verschmutzungen und/oder Fehlportionen aus einem Bereich der Bahn entfernt werden können.

Die Lösung dieser Aufgabe erfolgt durch eine Vorrichtung sowie durch ein Verfahren jeweils mit den Merkmalen des betreffenden unabhängigen Anspruchs.

Erfindungsgemäß ist zumindest für einen Teilbereich der Bahn eine Abführeinrichtung vorgesehen, welche dazu ausgebildet ist, von den Lebensmitteln stammende, insbesondere beim Aufschneiden der Lebensmittelprodukte und/oder bei der Handhabung der Portionen entstehende, Verschmutzungen und/oder Fehlportionen zumindest zeitweise neben den Teilbereich abzuführen.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke, wie beispielsweise Frischfleischstücke, handeln.

Mit anderen Worten handelt es sich im Rahmen der Erfindung bei einer Portion um die im Hinblick auf die Transportaufgabe kleinste Einheit, die einerseits über eine bestimmte Strecke transportiert werden muss und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen. Beispielsweise hinsichtlich der Bildung von Formaten, wie sie für die jeweils vorgesehene Verpackungsvorrichtung bereitgestellt werden müssen.

Ein Transportmover kann eine oder mehrere Portionen transportieren. Alternativ ist es auch möglich, dass mehrere, insbesondere zwei, Transportmover gemeinsam eine Portion transportieren. Die Transportmover können dabei gewissermaßen gemeinsam auf dem Bahnsystem als Einheit bewegt werden. Auf diese Weise können auch größere Lasten, insbesondere schwerere und/oder flächenmäßig größere Portionen, auf dem Bahnsystem bewegt werden, als mit nur einem Transportmover.

Bei dem Teilbereich der Bahn kann es sich insbesondere um einen verschmutzungsgefährdeten Bereich handeln. So können die Transportmover beispielsweise mit Hilfe einer Führung des Bahnsystems geführt werden. Diese Führung kann ein Schienensystem umfassen, welches insbesondere ein Paar von Schienen aufweisen kann. Diese Schienen können einen verschmutzungsgefährdeten Bereich bilden. Eine Reinigung dieser Schienen gestaltet sich meist als schwierig, weshalb einen Verschmutzung im Idealfall von vornherein verhindert werden sollte.

Als verschmutzungsgefährdeter Teilbereich kann auch beispielsweise der Übergangsbereich zwischen einem herkömmlichen Bandfördersystem zu einem Bahnsystem angesehen werden. Hierbei können Verschmutzungen vom Förderband auf die Bahn gelangen. Wird eine Scheibe unmittelbar von der Aufschneidevorrichtung auf die Transportmover geschnitten, so ist auch der im Bereich der Aufschneidevorrichtung befindliche Teilbereich der Bahn verschmutzungsgefährdet. Als verschmutzungsgefährdeter Teilbereich kann auch ein Übergabebereich zwischen den Transportmovern und einer Verpackungsvorrichtung angesehen werden. Dort können sich lösende Produktreste auf die Bahn gelangen, wenn beispielsweise Portionen mit Hilfe eines Robotergreifers auf den Transportmovern erfasst und in eine Verpackungsvorrichtung übergeben werden.

Zumindest für diese Teilbereiche ist eine Abführeinrichtung vorgesehen, um Verschmutzungen, beispielsweise Schneidreste und/oder Schneidabfälle, und/oder Fehlportionen zumindest zeitweise bzw. vorübergehend neben den Teilbereich abzuführen. Eine Fehlportion kann insbesondere eine Portion mit einem Fehlgewicht darstellen, d.h. das Gewicht der Teilportion, welches mit Hilfe einer Wiegeeinrichtung bestimmbar ist, weicht von einem Sollgewicht ab. Ferner sind vom Begriff "Fehlportion" auch Portionen mit einer unzureichenden Qualität anzusehen, z.B. mit einem zu hohen Fettgehalt, Fremdkörpereinschlüssen, fehlerhafter Struktur, insbesondere Dichteverteilung, oder Kontur, insbesondere ungleichmäßiger Form. In der Regel werden diese Mängel erste nach der Aufschneidevorrichtung, d.h. nach der Portionierung, detektiert.

Durch die Abführeinrichtung wird der Portionstransport insbesondere nicht behindert. So können sich die Transportmover trotz der Abführeinrichtung frei auf dem Bahnsystem bewegen.

Die Abführeinrichtung wird insbesondere nicht von einem Transportmover selbst gebildet, d.h. die Abführeinrichtung bewegt sich nicht selbst im Bahnsystem. Vorzugsweise befindet sich die Abführeinrichtung im Wesentlichen außerhalb der Bahn, reicht aber in den Bahnbereich hinein.

Verschmutzungen und/oder Fehlportionen werden erfindungsgemäß neben den Teilbereich der Bahn abgeführt, so dass ein hoher Hygienestandard aber auch eine gute Betriebssicherheit erreicht wird. Vor allem verschmutzungsempfindliche Teilbereiche der Bahn kommen somit nicht mit Lebensmitteln in Kontakt. Durch die Abführeinrichtung kann das Bahnsystem insbesondere derart geschützt bzw. gekapselt werden, dass selbst bei unter Hygienegesichtspunkten äußerst anspruchsvollen Bedingungen, wie sie bei der Verarbeitung von Lebensmittelprodukten und den damit verbundenen Reinigungsanforderungen herrschen, hohe Hygienestandards erfüllt und strenge Normen eingehalten werden können. Insbesondere ist es erfindungsgemäß möglich, sogar ein IP69K-fähiges Transportsystem mit vertretbarem Aufwand zu realisieren.

Weiterhein wird die unkontrollierte Verschleppung von Produktresten in das Bahnsystem erfindungsgemäß vermieden.

Weiterbildungen der Erfindung sind auch den abhängigen Ansprüchen, der Beschreibung sowie den beigefügten Zeichnungen zu entnehmen.

Erfindungsgemäß ist die Abführeinrichtung in einem Übergabebereich, in dem Portionen auf die Transportmover gelangen, vorgesehen. Dieser Übergabebereich ist besonders verschmutzungsgefährdet. Insbesondere soll bereits in diesem Übergabebereich verhindert werden, dass Verschmutzungen, beispielsweise Schneidreste oder Schneidabfälle, bzw. Fehlportionen, d.h. Portionen, welche ausgeschieden werden sollen, in das Bahnsystem, beispielsweise auf die Transportmover oder auf einen Teilbereich der Bahn, gelangen.

Erfindungsgemäß werden im Übergabebereich die Portionen von einer, insbesondere als Förderband ausgebildeten, Einlegevorrichtung oder von einer Aufschneidevorrichtung an die Transportmover übergeben. Der Übergabebereich kann somit insbesondere eine Schnittstelle zwischen einem Förderband und einem Bahnsystem bilden. Auch ist es denkbar, dass die Scheiben unmittelbar von der Aufschneidevorrichtung bzw. dem Schneidmesser auf die Transportmover geschnitten werden, d.h. der Übergabebereich ist in diesem Fall der Aufschneidebereich. Die Transportmover können hierbei die Funktion eines herkömmlichen Portionierbands übernehmen. Ein herkömmliches Portionierband kann insbesondere Schneidreste oder Fehlportionen aus dem Bandfördersystem entfernen. Beim Bahnsystem übernimmt diese Funktion nun die Abführeinrichtung.

Erfindungsgemäß umfasst die Abführeinrichtung eine zusätzlich zu der Bahn vorgesehene Abführvorrichtung, die zumindest zeitweise oberhalb des Teilbereichs der Bahn angeordnet ist. Die Abführeinrichtung kann insbesondere als separates Bauteil ausgebildet sein. Insbesondere kann die Abführvorrichtung permanent vorhanden sein oder nur zwischenzeitlich eingeschwenkt werden. Ist die Abführvorrichtung permanent vorhanden oder eingeschwenkt, gibt es eine Abführebene, in der die Abführeinrichtung liegt, und eine darüber befindliche Übergabeebene, in der die Träger laufen. Vorzugsweise ist die Abführeinrichtung unterhalb der Übergabeebene für die Portionshandhabung angeordnet.

Nach einer weiteren Ausführungsform umfassen die Transportmover jeweils für ihren Träger einen Halter, welcher die Abführeinrichtung umgreift, so dass der Träger oberhalb der Abführeinrichtung angeordnet ist. Vorzugsweise kann folglich in zwei unterschiedlichen Ebenen gearbeitet werden. Verschmutzungen und/oder Fehlportionen, welche in Richtung Bahn gelangen, werden in einer unteren Ebene durch die Abführeinrichtung abgeführt. Werden hingegen Portionen zur Bahn transportiert, können diese in einer oberen Ebene mit Hilfe der Träger aufgenommen werden. Der Halter samt Träger ist hierbei U- oder L-förmig ausgebildet. Die Abführeinrichtung kann somit mit Hilfe des Halters umfahren werden. Der Träger kann sich somit insbesondere stets oberhalb der Abführeinrichtung befinden. Gemäß einer weiteren Ausführungsform ist der Träger gitterförmig ausgebildet. Der Begriff "gitterförmig" ist breit zu verstehen. So sind beispielsweise auch ein Rechen und/oder mehrere parallele Stäbe oder Lamellen mit umfasst. Die einzelnen Elemente des Gitters oder Rechens sind insbesondere nur auf einer Seite miteinander verbunden und kragen auf der anderen Seite frei aus. D.h. es liegt insbesondere eine gabelartige Struktur vor. Durch die gitterförmige Ausgestaltung des Trägers können darauf befindliche Portionen mit Hilfe eines ebenfalls ein Gitter oder einen Rechen umfassenden Greifers entnommen werden. Auch kann die Portionslage beim Untergreifen des Trägers korrigiert werden, indem der Greifer z.B. nur bis zu einer bestimmten Position eingreift. Die Portionen können insbesondere durch ein Band schräg nach oben abgekämmt werden. Vorzugsweise ist der Halter unterhalb des Gitters flächig und durchgehend ausgebildet, so dass vom Gitter auf den Halter fallende Verschmutzungen aufgefangen werden und nicht auf die Bahn gelangen. Eine schräge Ausgestaltung dieser Fläche des Halters begünstigt zusätzlich die Schmutzabweisung zu einer Seite hin.

Nach einer weiteren Ausführungsform ist die Abführvorrichtung zu einem aktiven Abführen der Verschmutzungen und/oder Fehlportionen ausgebildet. Die Abführvorrichtung kann insbesondere beweglich ausgebildet sein. Vorzugsweise kann die Abführvorrichtung einen eigenen Antrieb umfassen. Alternativ kann der Antrieb auch abgeleitet werden, beispielsweise von einem Antrieb für ein Bandfördersystem. Durch das aktive Abführen können Verschmutzungen und/oder Fehlportionen gezielt ausgeschleust und an einen vorgegebenen Ort transportiert werden. An diesem Ort kann beispielsweise ein Sammelbehälter für die Schneidreste oder eine Vorrichtung zum Korrigieren, insbesondere Komplettieren, der fehlerhaften bzw. unvollständigen Portionen angeordnet sein. Die Verschmutzungen und/oder Fehlportionen können auf diese Weise insbesondere gezielt ausgeschleust werden.

Nach einer weiteren Ausführungsform ist die Abführvorrichtung dazu ausgebildet, die Verschmutzungen und/oder Fehlportionen bezüglich der Transportrichtung seitlich neben den Teilbereich der Bahn abzuführen. Die Verschmutzungen und/oder Fehlportionen gelangen somit seitlich neben einen insbesondere verschmutzungsempfindlichen Teilbereich der Bahn und fallen nicht auf den Teilbereich. Seitlich neben der Bahn können beispielsweise Sammelbehältnisse oder Förderbänder vorgesehen sein, welche die abgeführten Verschmutzungen und/oder Fehlportionen auffangen und zu einem Sammelbehältnis, z.B. Abfallbehältnis, oder einer Einrichtung zur Weiterverarbeitung, z.B. Portionskomplettierung, führen.

Insbesondere kann die Abführvorrichtung rechtwinklig oder schräg zur Transportrichtung orientiert sein, so dass die Verschmutzungen und/oder Fehlportionen insbesondere rechtwinklig oder schräg zur Transportrichtung abgeführt werden. Alternativ ist es auch möglich, dass die Abführvorrichtung zumindest im Wesentlichen parallel zur Transportrichtung orientiert ist. Verschmutzungen und/oder Fehlportionen können dabei vorzugsweise entgegen oder in Transportrichtung abgeführt werden, zum Beispiel in eine weiter von der Bahn entfernte Ebene nach oben oder unten, mit Parallelverstz zum Bahnverlauf.

Gemäß einer weiteren Ausführungsform umfasst die Abführvorrichtung eine Fördervorrichtung, vorzugsweise ein Förderband, wobei insbesondere die Förderrichtung des Förderbands rechtwinklig oder schräg zur Transportrichtung verläuft. Ein Förderband ist insbesondere kostengünstig. Auch werden keine besonderen Ansprüche an das Förderband gestellt, so dass auch herkömmliche Förderbänder verwendet werden können. Das Förderband kann auch insbesondere parallel zur Transportrichtung angeordnet sein. Eine rechtwinklige oder schräge Anordnung hat den Vorteil, dass die Verschmutzungen und/oder Fehlportionen möglichst schnell von dem Teilbereich der Bahn entfernt werden, während bei einer parallelen Anordnung die Verschmutzungen und/oder Fehlportionen über einen etwas längeren Abschnitt oberhalb der Bahn transportiert werden. Die Bahn kann in diesem Fall eine Kurve beschreiben, so dass die Verschmutzungen und/oder Fehlportionen z.B. geradeaus weitergeführt und abgeführt werden können. Das Förderband kann insbesondere verschwenkbar ausgebildet sein und nur zeitweise Verschmutzungen und/oder Fehlportionen abführen.

Gemäß einem Ausführungsbeispiel der Erfindung umfasst die Fördervorrichtung ein Förderband, das rechtwinklig oder schräg zur Transportrichtung und durch einen Spalt hindurch verläuft, der im Transportbetrieb zwischen der Bahn und dem Läufer vorhanden ist, insbesondere zwischen einer Unterseite des Läufers und der Oberseite eines Motorgehäuses des Bahnsystems. Bei dem Motorgehäuse kann es sich beispielsweise um ein Gehäuse handeln, das den Stator eines linearen Synchronmotors beinhaltet, wie es im Einleitungsteil beschrieben ist.

Bei dieser Ausführungsform wird der ohnehin vorhandene Spalt genutzt, um ein zum Abführen von Verschmutzungen dienendes Förderband auf einem Niveau unterhalb der Transportmover durch die Vorrichtung hindurch zu führen. Ein solches Förderband kann ausreichend dünn ausgeführt werden, um durch den Spalt hindurchgeführt zu werden. Die Führung des Förderbandes kann durch eine grundsätzlich beliebige Anzahl von grundsätzich eine beliebige Größe aufweisenden Umlenkrollen erfolgen, mit welchen der Verlauf des insbesondere endlos umlaufenden Förderbandes entsprechend den jeweiligen baulichen Gegebenheiten gewählt werden kann. Zumindest eine der Umlenkrollen kann als Antriebsrolle für das Förderband dienen.

Nach einer weiteren Ausführungsform umfasst die Abführvorrichtung eine bewegbare Abdeckung. Die Abdeckung kann sich insbesondere rechtwinklig zur Transportrichtung hin und her bewegen oder drehbar ausgebildet sein.

Gemäß einer weiteren Ausführungsform ist die Abdeckung flächig und/oder scheibenförmig ausgebildet. Die Abdeckung kann somit insbesondere als drehbare Scheibe ausgebildet sein, welche Verschmutzungen durch eine Drehbewegung vom Teilbereich der Bahn in einen unkritischen Bereich fördert.

Nach einer weiteren Ausführungsform umfasst die Abdeckung eine zumindest im Wesentlichen ebene Abdeckfläche. Insbesondere kann eine Drehachse senkrecht zu einer Transportebene orientiert sein. Die Transportebene kann hierbei insbesondere einer horizontalen Ebene, in der sich die Transportmover im Bahnsystem bewegen, entsprechen. Die Abdeckung kann auch insbesondere leicht geneigt sein. Die Abdeckung, welche vorzugsweise als drehbare Scheibe ausgebildet ist, kann zumindest vorübergehend eine Aussparung zum Passieren eines Transportmovers aufweisen. Eine Aussparung ist aber insbesondere bei einem Träger, welcher mit Hilfe eines die Abführvorrichtung umgreifenden Halters befestigt ist, nicht notwendig. In diesem Fall kann der Träger nämlich auch ohne in der Abdeckung ausgebildete Aussparung ungehindert die Abdeckung passieren. Ist eine Aussparung in der Abdeckung vorgesehen, so kann der Transportmover insbesondere die Aussparung vorübergehend öffnen, z.B. mit Hilfe eines Schiebers oder dergleichen. Vorzugsweise kann eine Abstreifvorrichtung vorgesehen sein, welche dazu ausgebildet ist, Verschmutzungen und/oder Fehlportionen von der Abdeckung abzustreifen. Dies erfolgt vorzugsweise auf der von der Bahn abgewandten Seite.

Gemäß einer weiteren Ausführungsform umfasst die Abführvorrichtung eine stationäre Abdeckung mit einer neben den Teilbereich der Bahn führenden Abführschräge. Die Abführvorrichtung ist in diesem Fall passiv ausgebildet, d.h. sie fördert nicht aktiv Verschmutzungen und/oder Fehlportionen. Die Abschirmung oder der Schutz verschmutzungsgefährdeter Teilbereiche kann in diesem Fall z.B. durch ein schräges Blech erfolgen. Hierbei können die Verschmutzung und/oder Fehlportionen insbesondere mit Hilfe der Schwerkraft abgeführt werden. Ein separater Antrieb ist nicht notwendig. Insbesondere kann die Abdeckung verschwenkbar ausgebildet sein und nur zeitweise Verschmutzungen und/oder Fehlportionen abführen. Auch eine Reinigung der Abdeckung mit einem Abstreifer in vorgebbaren Zeitabständen ist denkbar.

Vorzugsweise kann am oberen Ende der Schräge eine Tropfkante vorgesehen sein, an welcher entstehende Flüssigkeiten abtropfen können. Die Abdeckung kann insbesondere auf die Bahn gesteckt werden. Insbesondere kann eine werkzeuglos lösbare Verbindung zwischen der Abdeckung und der Bahn geschaffen werden. So kann insbesondere eine Klemm-, Steck-, Schraub-, Rast- und/oder magnetische Verbindung vorgesehen sein.

Nach einer weiteren Ausführungsform ist die Abführvorrichtung dazu ausgebildet, eine zum Übergeben von Portionen an die Transportmover dienende Einlegevorrichtung aus einer Übergabestellung in eine Abführstellung zu bewegen. Die Abführeinrichtung umfasst hierbei nicht notwendigerweise ein separates Bauteil, sondern wird durch die Einlegevorrichtung selbst gebildet. Auf diese Weise können Bauteile und damit einhergehend Kosten eingespart werden. Insbesondere kann die Einlegevorrichtung verschwenkt oder rechtwinklig zur Transportrichtung der Transportmover bewegt werden. Die Einlegevorrichtung kann insbesondere ein Förderband umfassen. Vorzugsweise fördert die Einlegevorrichtung nur dann in Richtung des gefährdeten Teilbereichs der Bahn, wenn ein Transportmover und/oder ein Verpackungsmittel, insbesondere ein Tray, im Übergabebereich angeordnet ist bzw. eine Sollportion auf der Einlegevorrichtung detektiert worden ist. Die Einlegevorrichtung wird jedoch von der Bahn wegbewegt, wenn Verschmutzungen und/oder Fehlportionen gefördert werden. In diesem Fall wird die Einlegevorrichtung beispielsweise derart verschwenkt, dass die einlaufenden bzw. ankommenden Verschmutzungen und/oder Fehlportionen in einen Bereich, z.B. mit einem Sammelbehälter und/oder einer Komplettierungsvorrichtung, neben der Bahn gelenkt werden.

Gemäß einer weiteren Ausführungsform ist die Abführeinrichtung derart ausgebildet, dass der Teilbereich der Bahn zumindest zeitweise neben einem Abführbereich für die Verschmutzungen und/oder Fehlportionen verläuft. Die Bahn umfährt somit insbesondere einen Bereich, in dem vermehrt Verschmutzungen auftreten können. Insbesondere kann der Abführbereich mit dem Übergabebereich für die Portionen identisch sein. Vorzugsweise ist in diesem Fall die Einlegevorrichtung stationär, d.h. nicht verschwenkbar. Es wird somit der Abführbereich mit der Bahn umgangen. In diesem Fall kann ein fester Bahnverlauf vorgesehen sein, der den Abführbereich ausspart. Alternativ kann auch ein Teilbereich der Bahn aus dem bzw. in den Abführbereich bewegt werden. Werden keine Portionen übergeben, so kann der Bahnverlauf hierbei zumindest unterbrochen sein bzw. einen anderen Weg aufweisen. Die Bahn kann insbesondere zumindest in Teilbereichen quer zur Transportrichtung verschoben werden.

Nach einer weiteren Ausführungsform umfassen die Transportmover jeweils einen zumindest zeitweise seitlich auskragenden und in den Übergabebereich hineinragenden Träger. Insbesondere dann, wenn der Bahnverlauf den Abführbereich ausspart, kann der Träger dennoch in diesen Bereich hineinragen, um Portionen aufzunehmen. Vorzugsweise können Mittel vorgesehen sein, die den normalerweise mittig zum Läufer bzw. zur Bahn angeordneten Träger seitlich auskragen lassen, z.B. wenn der Transportmover in den Übergabebereich bzw. den Abführbereich gelangt. Die Mittel können hierbei insbesondere dafür sorgen, dass der Träger mit den zugeordneten Transportmovern gekoppelt wird und auf dem eigentlichen Bahnverlauf verbleibt. Der Träger kann somit zumindest vorübergehend seitlich verschoben werden und anschließend, z.B. aus Stabilitätsgründen, wieder zurück in eine mittige Position verstellt werden.

Gemäß einer weiteren Ausführungsform umfasst die Abführeinrichtung ein Gebläse, welches dazu ausgebildet ist, die Verschmutzungen und/oder Fehlportionen neben den Teilbereich zu blasen. Das Gebläse kann beispielsweise vor dem eigentlichen Übergabebereich vorgesehen sein, so dass z.B. Schneidreste bereits entfernt werden, ehe eine Übergabe an die Transportmover erfolgt. Der Übergabebereich hält sich gewissermaßen selbst sauber.

Die Erfindung betrifft auch ein Verfahren zum Bewegen von Portionen, die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen. Die Portionen werden mittels einer Mehrzahl individuell bewegbarer Transportmover bewegt, die mittels einer Steuereinrichtung in einem Bahnsystem entlang wenigstens einer vorgegebenen Bahn verfahren werden. Zumindest ein, insbesondere verschmutzungsgefährdeter, Teilbereich der Bahn wird vor den von Lebensmitteln stammenden, insbesondere beim Aufschneiden der Lebensmittelprodukte und/oder bei der Handhabung der Portionen entstehenden, Verschmutzungen und/oder Fehlportionen, geschützt, indem die Verschmutzungen und/oder Fehlportionen mittels einer Abführeinrichtung zumindest zeitweise neben den Teilbereichen abgeführt werden.

Alle hier beschriebenen Ausführungsformen der Vorrichtung sind insbesondere dazu ausgebildet, nach dem hier beschriebenen Verfahren betrieben zu werden. Ferner können alle hier beschriebenen Ausführungsformen der Vorrichtung sowie alle beschriebenen Ausführungsformen des Verfahrens jeweils miteinander kombiniert werden.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Bewegungsvorrichtung,
- Fig. 2: eine Draufsicht eines Teilbereichs der Bewegungsvorrichtung gemäß Fig. 1,
- Fig. 3 und 4: Schnittansichten der Bewegungsvorrichtung gemäß Fig. 2,
- Fig. 5 und 6: Perspektivansichten weiterer Ausführungsformen erfindungsgemäßer Bewegungsvorrichtungen,
- Fig. 7 und 8: Draufsichten weiterer Ausführungsformen einer erfindungsgemäßen Bewegungsvorrichtung,
- Fig. 9: eine Perspektivansicht einer weiteren Ausführungsform einer erfindungsgemäßen Bewegungsvorrichtung,
- Fig. 10: eine schematische Seitenansicht einer erfindungsgemäßen Bewegungsvorrichtung,
- Fig. 11 bis 16: Draufsichten weiterer Ausführungsformen einer erfindungsgemäßen Bewegungsvorrichtung, und
- Fig. 17: eine weitere Ausführungsform der Erfindung.

Zunächst wird festgestellt, dass die dargestellten Ausführungsformen rein beispielhafter Natur sind. Insbesondere können auch mehrere Bahnen nebeneinander angeordnet sein, um somit einen Mehrspurbetrieb zu ermöglichen. Die Merkmale einer Ausführungsform können auch beliebig mit Merkmalen einer anderen Ausführungsform kombiniert werden. Insbesondere kann auch anstelle einer Einlegevorrichtung vorgesehen sein, dass unmittelbar von einer Aufschneidevorrichtung auf die Transportmover geschnitten wird oder dass Portionen direkt durch eine Robotereinrichtung oder von Hand auf die Transportmover aufgelegt werden.

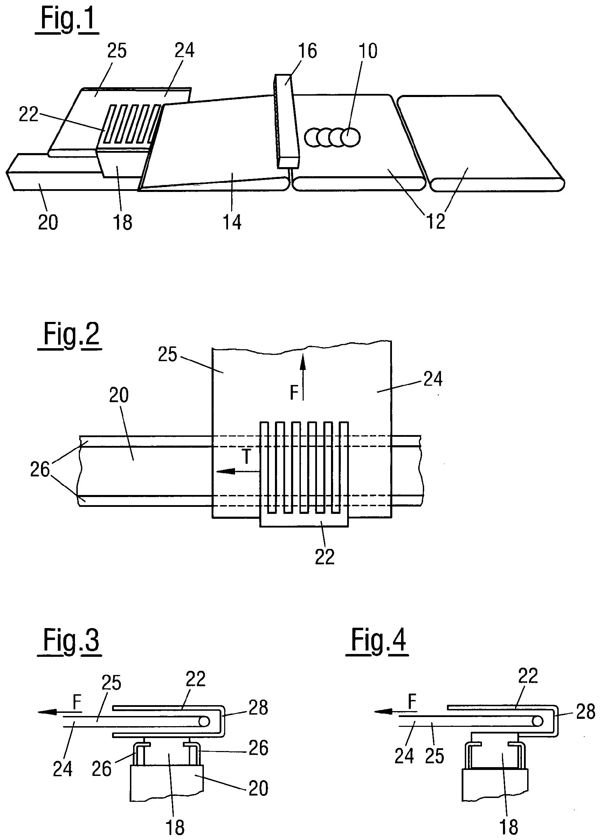

In Fig. 1 ist eine Vorrichtung zum Bewegen von Portionen 10 gezeigt. Eine Portion 10 umfasst hier vier Scheiben, welche mit Hilfe einer nicht dargestellten Aufschneidevorrichtung von einem Produkt abgetrennt wurden. Die Aufschneidevorrichtung kann insbesondere ein planetarisch und/oder rotatorisch umlaufendes Kreis- oder Sichelmesser umfassen. Insbesondere können Produkte auch im sogenannten Mehrspurbetrieb aufgeschnitten werden, so dass Portionen 10 auf parallelen Spuren entstehen. Die Portionen 10 werden über Förderbänder 12 zu einer Einlegevorrichtung 14 gefördert. Bei der Einlegevorrichtung 14 kann es sich insbesondere um ein Messerkantenband handeln. Ein Scanner 16 ermöglicht eine Datenerhebung zum Zwecke der Eintaktung oder auch Ausschleusung der Portionen 10.

An die Einlegevorrichtung 14 schließt sich die eigentliche Bewegungsvorrichtung an. Diese umfasst eine Vielzahl von Transportmovern 18, welche auf einem Bahnsystem auf einer vorgegebenen Bahn 20 bewegt werden. Der hier dargestellte Mover 18 weist einen Träger 22 auf. Dieser Träger kann rechenartig ausgebildet sein, so dass darauf befindliche Portionen 10 auf einfache Weise mittels eines ebenfalls als Rechen ausgebildeten Robotergreifers abgenommen werden können.

Der Übergabebereich, an dem die Portionen 10 von der Einlegevorrichtung 14 an die Transportmover 18 übergeben werden, ist besonders verschmutzungsgefährdet. So besteht die Gefahr, dass Produktreste, die beim Aufschneiden oder Anschneiden von Produktriegeln entstehen, auf die Bahn 20 gelangen. Dies ist unter hygienischen Gesichtspunkten unerwünscht. Auch kann durch aufgestaute Produktreste die Bewegungsfreiheit der Mover 18 auf der Bahn 20 eingeschränkt werden. Aus diesem Grund ist eine Abführeinrichtung 24 vorgesehen, welche verhindert, dass u.a. Schneidreste auf die Bahn 20 fallen.

Eine Draufsicht auf die Bewegungsvorrichtung ist in Fig. 2 dargestellt. Die Abführeinrichtung 24 ist hierbei als Förderband 25 ausgebildet, welches Produktreste in Förderrichtung F seitlich neben die Bahn 20 abführt. Die Förderrichtung F ist hierbei rechtwinklig zur Transportrichtung T der Mover 18 orientiert. Verschmutzungen können auf diese Weise seitlich abgeführt werden, ohne dass diese auf die Bahn 20 bzw. auf Führungen 26 der Bahn 20 gelangen. Die Führungen 26 können insbesondere als Führungsschienen für die Mover 18 ausgebildet sein.

Wie in den Schnittansichten gemäß Fig. 3 und Fig. 4 zu sehen ist, umgreift der Träger 22 mit einem Halter 28, welcher mit dem restlichen Mover 18 verbunden ist, die Abführeinrichtung 24. Auf dem Träger 22 des Movers 18 können somit ungehindert Portionen 10 aufgenommen werden, wenn sich der Mover 18 unterhalb der Einlegevorrichtung 14 befindet. Auch können die Mover 18 frei in der Bahn 20 bewegt werden, so dass diese nicht von der Abführeinrichtung 24 behindert werden.

Bei der Ausführungsform gemäß Fig. 3 bilden der Träger 22 und der Halter 28 ein "U". Dies ist insbesondere dann vorteilhaft, wenn der Träger 22 gitterförmig ausgebildet ist. Der Halter 28 ist im Bereich unterhalb des Trägers 22 flächig ausgebildet, so dass durch das Gitter fallende Produktreste durch den Halter 28 aufgefangen werden.

Ist der Träger 22 hingegen nicht als Gitter ausgebildet, kann der Halter 28, wie in Fig. 4 gezeigt, auch lediglich eine im Wesentlichen vertikale Komponente aufweisen. Ein flächiger, im Wesentlichen horizontaler Abschnitt unterhalb des Trägers 22 ist hierbei nicht notwendig. Der Träger 22 und der Halter 28 bilden hierbei im Wesentlichen ein "L".

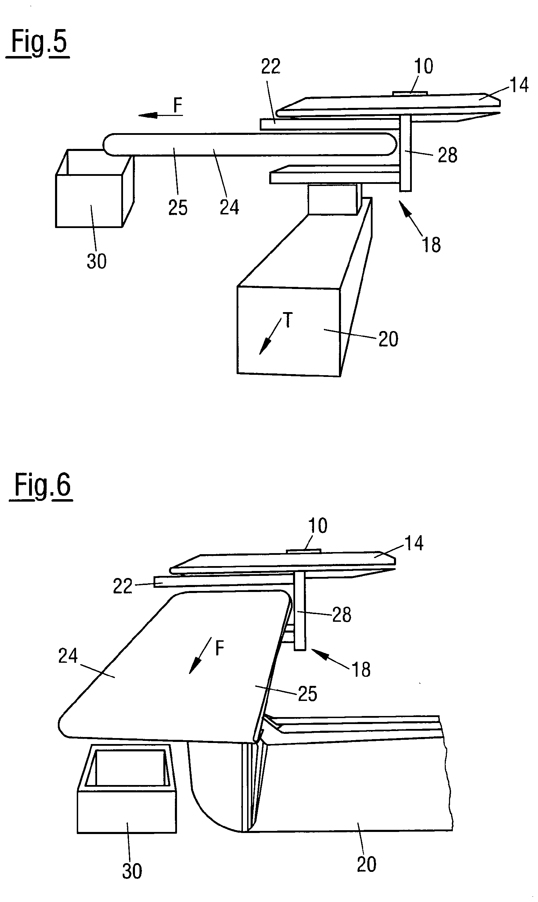

In Fig. 5 ist eine Perspektivansicht einer Bewegungsvorrichtung dargestellt. Die Abführeinrichtung 24 ist hierbei derart orientiert, dass Verschmutzungen und/oder Fehlportionen etwa rechtwinklig zur Transportrichtung T der Transportmover 18 abgeführt und beispielsweise einem Abfallbehältnis 30 zugeführt werden.

Eine Ausführungsform, bei der die Abführeinrichtung 24 parallel zur Bahn 20 angeordnet ist, so dass die Förderrichtung F parallel zur Transportrichtung T verläuft, ist in Fig. 6 gezeigt. Die Bahn 20 beschreibt hierbei eine Kurve, so dass Verschmutzungen und/oder Fehlportionen neben die Bahn 20 in das Abfallbehältnis 30 abgeführt werden.

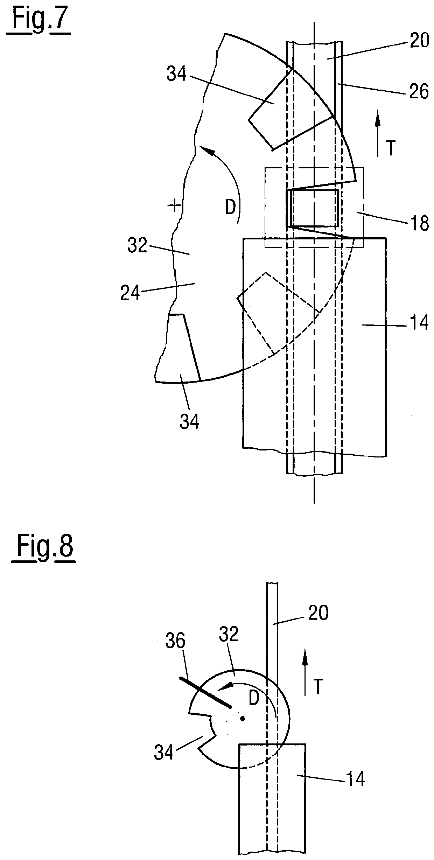

Gemäß den Ausführungsformen, welche in Fig. 7 und 8 dargestellt sind, kann die Abführeinrichtung 24 auch als drehbare Scheibe 32 ausgebildet sein. Die Scheibe 32 bildet eine Abdeckung, weist verschließbare Aussparungen 34 auf und kann in Drehrichtung D gedreht werden. Die Aussparungen 34 können insbesondere mittels eines Schiebers verschlossen und geöffnet werden.

Werden Portionen durch den Transportmover 18 abtransportiert, so trifft der Transportmover 18 auf die Aussparung 34 der Scheibe 32 und öffnet diese. Der Transportmover 18 wird somit in seiner Bewegung nicht eingeschränkt. Werden keine Portionen gefördert, treffen Verschmutzungen hingegen auf Bereiche der Scheibe 32, welche keine Aussparung 34 aufweisen bzw. auf verschlossene Aussparungen 34. Die Verschmutzungen werden in Drehrichtung D abgeführt. Die Drehbewegung der Scheibe 32 ist auf die Bewegungen der Transportmover 18 abgestimmt. Hierfür sorgt eine Steuereinrichtung, der z.B. die Positionen bzw. Geschwindigkeiten der Transportmover 18 und die Winkelstellungen der Aussparungen 34 bekannt sind.

In Fig. 8 ist eine Variante dargestellt, bei der lediglich eine einzige, permanent offene Aussparung 34 vorgesehen ist. Bei einem Träger 22, welcher zusammen mit einem Halter 28 die Abführeinrichtung 24 umgreift, kann die Scheibe 32 auch gänzlich geschlossen sein und keine Aussparung 34 aufweisen. Aufgrund der L-bzw. U-förmigen Ausgestaltung kann der Transportmover 18 auch in diesem Fall ungehindert die Abführeinrichtung 24 passieren.

Um Verschmutzungen und/oder Fehlportionen von der Scheibe 32 zu entfernen, kann eine Abstreifvorrichtung 36, beispielsweise ein Ablenkblech, vorgesehen sein. Die Abstreifvorrichtung 36 kann insbesondere passiv ausgebildet sein, so dass Verschmutzungen und/oder Fehlportionen aufgrund der Rotation der Scheibe 32 von dieser entfernt werden.

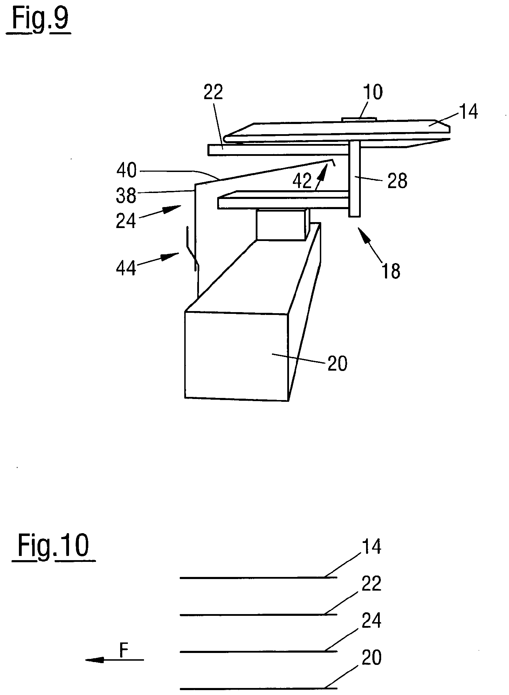

Gemäß der Ausführungsform, welche in Fig. 9 dargestellt ist, ist die Abführeinrichtung 24 als stationäre Abdeckung 38, z.B. als passives Blech, ausgebildet. Das Blech 38 weist eine Schräge 40 auf, so dass Verschmutzungen bzw. Fehlportionen, welche auf das Blech 38 gelangen, neben die Bahn 20 aufgrund der Schwerkraft abgeführt werden. Am oberen Ende der Schräge 40 ist eine Abtropfkante 42 vorgesehen.

Das Blech 38 kann mittels einer Steckverbindung 44 an die Bahn 20 oder eine Basis für die Bahn 20 gesteckt werden.

In Fig. 10 ist schematisch die Abfolge der einzelnen Ebenen dargestellt. Diese Abfolge wird grundsätzlich eingehalten, unabhängig davon, ob die Abführeinrichtung 24 aktiv oder passiv ausgebildet ist. An oberster Stelle befindet sich die Ebene der Einlegevorrichtung 14, gefolgt von der Ebene der Träger 22, in welcher die Portionen 10 übergeben bzw. gehandhabt werden. Darunter befindet sich die Abführeinrichtung 24. Diese Abführebene erstreckt sich oberhalb einer Bahnebene, in der sich die Bahn 20 mit den zu schützenden Teilbereichen befindet.

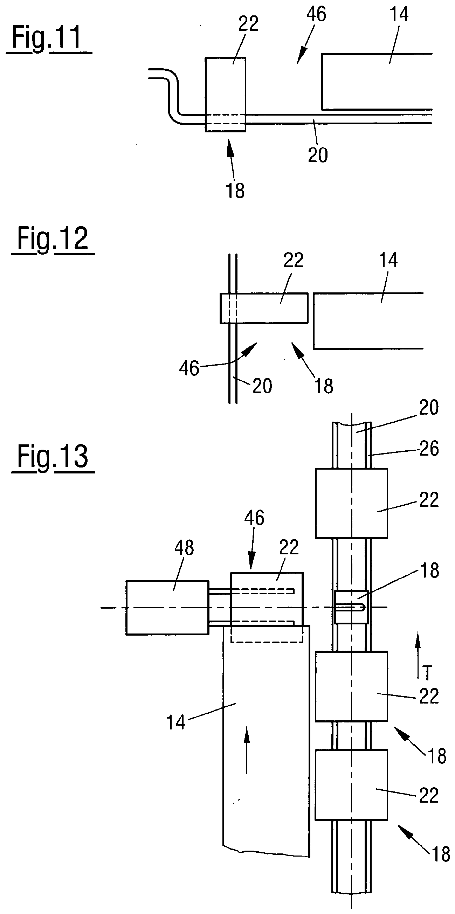

Gemäß den Ausführungsvarianten in Fig. 11 bis Fig. 13 verläuft die Bahn 20 neben der Einlegevorrichtung 14. Verschmutzungen und/oder Fehlportionen gelangen somit in einen Abführbereich 46, während die Bahn 20 den Abführbereich 46 umfährt. Um dennoch Portionen 10 aufnehmen zu können, kann, wie in den Fig. 11 und 12 dargestellt, der Träger 22 seitlich auskragen. Der Träger 22 kann somit in den Abführbereich 46 hineinreichen, um von der Einlegevorrichtung 14 kommende Portionen 10 aufzunehmen. Die Bahn 20 kann hierbei parallel oder rechtwinklig zur Einlegevorrichtung 14 verlaufen.

Gemäß der in Fig. 13 dargestellten Ausführungsform ist eine Abholvorrichtung 48 vorgesehen, welche Träger 22 von den Transportmovern 18 abholen und in den Abführbereich 46 transportieren kann. Nachdem eine Portion 10 aufgenommen wurde, kann die Abholvorrichtung 48 den mit einer Portion 10 bestückten Träger 22 wieder an den Transportmover 18 zurückgeben, welcher daraufhin weiter in der Bahn 20 befördert wird. Die Abholvorrichtung 48 kann somit insbesondere die Träger 22 quer zur Transportrichtung T verfahren.

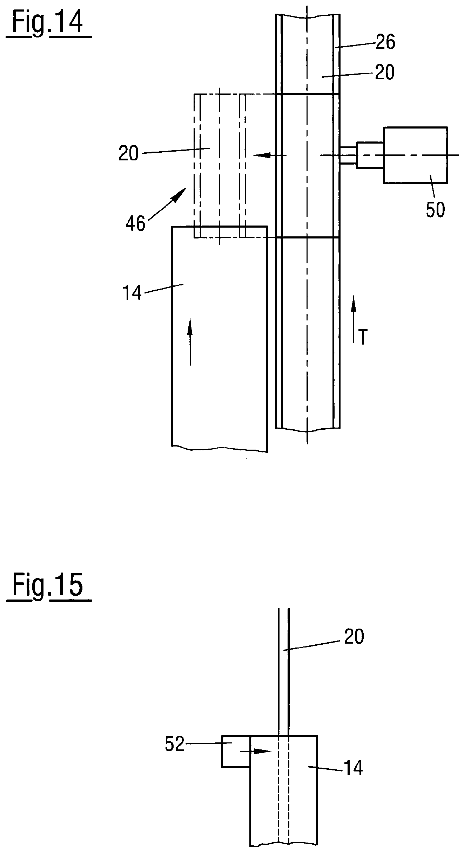

Wie in der Ausführungsform gemäß Fig. 14 zu sehen ist, kann auch zumindest zeitweise ein Teilbereich der Bahn 20 selbst mit Hilfe einer Querverstelleinrichtung 50 quer zur Transportrichtung T verstellt werden, falls Portionen 10 an die Transportmover 18 übergeben werden sollen. Die Querverstelleinrichtung 50 kann die Bahn 20 insbesondere mit Hilfe eines Motors, einer Spindel und/oder eines Pneumatikzylinders verstellen. Werden keine Portionen übergeben, befindet sich der Bahnabschnitt 20 an seiner Normalposition, so dass Verschmutzungen und/oder Fehlportionen in den Abführbereich 46 gelangen und somit seitlich neben der Bahn 20 abgeführt werden.

Gemäß der in Fig. 15 dargestellten Ausführungsform ist ein Gebläse 52 vorgesehen, welches Verschmutzungen und/oder Fehlportionen von der Einlegevorrichtung 14 abbläst, so dass diese nicht auf die Bahn 20 gelangen. Vorzugsweise wird dabei ein Druckluft-Impuls ausgenutzt.

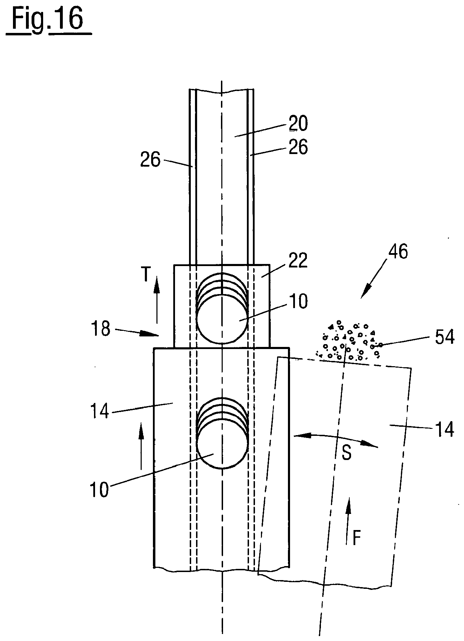

Wie in Fig. 16 zu sehen ist, kann auch die Bahn 20 selbst stationär ausgebildet sein, während die Einlegevorrichtung 14 beweglich, insbesondere verschwenkbar, ausgebildet ist. Verschmutzungen 54 werden hierbei seitlich von der Bahn 20 abgeführt. Sollen hingegen Portionen 10 an die Transportmover 18 übergeben werden, so wird die Einlegevorrichtung 14 in Verschwenkrichtung S verschwenkt. Die Portionen 10 können daraufhin an die Transportmover 18 übergeben werden. In Anwendungen, in denen meist keine Portionen 10 übergeben werden, ist die Einlegevorrichtung 14 die meiste Zeit über in Richtung Abführeinrichtung 46 ausgeschwenkt.

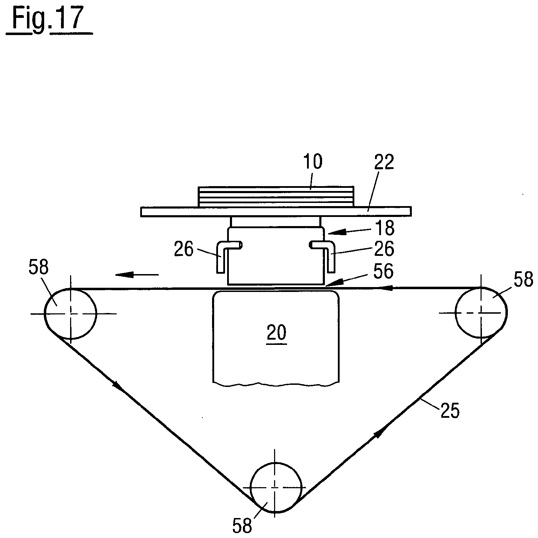

Bei dem in Fig. 17 dargestellten Ausführungsbeispiel ist als Abführeinrichtung ein Förderband 25 vorgesehen, das als ein Endlosband ausgebildet ist und um hier drei Umlenkrollen 58 umläuft. Eine der Umlenkrollen 58 ist als Antriebsrolle ausgebildet, mit welcher das Förderband 25 in der Ansicht der Fig. 17 gegen den Uhrzeigersinn umlaufend bewegt wird.

Im Bereich der Bahn 20 verläuft das Förderband 25 senkrecht zur Transportrichtung.

Das Förderband 25 ist derart dünn ausgeführt, dass es durch den Spalt 56 hindurch verlaufen kann, der zwischen den Transportmovern 18 und der Bahn 20 vorhanden ist, wenn die Transportmover 18 entlang der Bahn 20 bewegt werden.

Insbesondere ist dieser Spalt 56 zwischen der Unterseite eines mittels Führungen 26 des Bahnsystems geführten Läufers des Transportmovers 18 und der Oberseite eines Motorgehäuses der Bahn 20 vorhanden.

Mit seiner Breite erstreckt sich das Förderband 25 folglich über einen Teilbereich der Bahn, in welchem insbesondere eine erhöhte Verschmutzungsgefahr besteht. Beispielsweise kann das Förderband 25 in einem Portionierbereich im Anschluss an eine Lebensmittelaufschneidevorrichtung und/oder in Einlege- und Übergabebereichen für Portionen 10 angeordnet werden.

Im Bereich des Förderbandes 25 sind die Führungen 26 für die Transportmover 18 entsprechend ausgespart. Beispielsweise kann zwischen vertikalen Halterungen für diese Führungen 26 an der Bahn 20 bzw. an dem erwähnten Motorgehäuse ausreichend Platz vorhanden sein, um auch vergleichsweise breite Förderbänder 25 hindurchführen zu können.

Vorzugsweise liegt das Förderband 25 relativ locker, aber zumindest im Wesentlichen flächig auf der Oberseite der Bahn 20 bzw. des Motorgehäuses auf. Ist das Band 25 ausreichend dünn ausgeführt, können die Transportmover 18 einfach über das Band 25 hinweg bewegt werden.

Wenn lediglich zwei Umlenkrollen für das Förderband 25 vorgesehen sind, dann ist bevorzugt vorgesehen, dass sich diese Umlenkrollen mit ihrer Oberseite etwa auf dem Höhenniveau der Oberseite der Bahn 20 bzw. des Motorgehäuses befinden. Der vor Verschmutzungen zu schützende Bereich ist durch die Umlenkrollen vorzugsweise seitlich begrenzt. Die Drehachsen der Umlenkrollen sind bevorzugt parallel zur Transportrichtung angeordnet. Alternativ ist es möglich, dass die Umlenkrollen mit ihren Drehachsen schräg zur Transportrichtung ausgerichtet sind. Dies kann beispielsweise dann der Fall sein, wenn hierdurch die anfallenden Verschmutzungen besser erfasst werden können.

Wenn lediglich zwei Umlenkrollen für das Förderband 25 vorhanden sind, dann besitzen diese einen vergleichsweise großen Durchmesser, um das Untertrum des Förderbandes 25 unter der Bahn 20 bzw. dem Motorgehäuse hindurchführen zu können.

Wenn dagegen - wie im Ausführungsbeispiel der Fig. 17 - mehr als zwei Umlenkrollen 58 vorhanden sind, dann können diese einen kleineren Durchmesser besitzen, da es möglich ist, mit mehr als zwei Umlenkrollen 58 das Förderband 25 in beliebiger Art und Weise zu führen und dabei bauliche Einschränkungen zu umgehen.

Was die Beseitigung der abtransportierten Verschmutzungen von dem Förderband 25 anbetrifft, so ist bevorzugt vorgesehen, im unteren Bereich des Förderbandes, d.h. im Bereich des Untertrums, entsprechende Abstreif- oder Abkämmvorrichtungen vorzusehen.

Erfindungsgemäß kann verhindert werden, dass Verschmutzungen 54 und/oder Fehlportionen auf Teilbereiche der Bahn 20 gelangen. Mit Hilfe der jeweiligen Abführeinrichtung 24 können Verschmutzungen 54 und/oder Fehlportionen entfernt werden, ohne dass die Transportmover 18 in ihrer Bewegungsfreiheit entlang der Bahn 20 eingeschränkt werden.

### Bezuqszeichenliste

- 10: Portion
- 12: Förderband
- 14: Einlegevorrichtung
- 16: Scanner
- 18: Transportmover
- 20: Bahn
- 22: Träger
- 24: Abführeinrichtung
- 25: Förderband
- 26: Führung
- 28: Halter
- 30: Abfallbehältnis
- 32: Scheibe
- 34: Aussparung
- 36: Abstreifvorrichtung
- 38: Blech
- 40: Schräge
- 42: Abtropfkante
- 44: Steckverbindung
- 46: Abführbereich
- 48: Abholvorrichtung
- 50: Querverstelleinrichtung
- 57: Gebläse
- 54: Verschmutzung
- 56: Spalt
- 58: Umlenkrolle
- F: Förderrichtung
- T: Transportrichtung
- D: Drehrichtung
- S: Schwenkrichtung

## Patentansprüche

1. Vorrichtung zum Bewegen von Portionen (10), die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen,
mit einer Mehrzahl individuell bewegbarer Transportmover (18) zum Transport von Portionen (10),
mit einem Bahnsystem für die Transportmover (18), in welchem die Transportmover (18) entlang wenigstens einer vorgegebenen Bahn (20) in einer Transportrichtung (T) bewegbar sind, und
mit einer Steuereinrichtung zum Steuern der Bewegungen der Transportmover (18) in dem Bahnsystem,
wobei die Transportmover (18) jeweils zumindest einen mit dem Bahnsystem zusammenwirkenden Läufer und wenigstens einen am Läufer angebrachten Träger (22) für Portionen (10) umfassen,
wobei zumindest für einen, insbesondere verschmutzungsgefährdeten, Teilbereich der Bahn (20) eine Abführeinrichtung (24) vorgesehen ist, wobei die Abführeinrichtung (24) eine zusätzlich zu der Bahn (20) vorgesehene Abführvorrichtung umfasst, die zumindest zeitweise oberhalb des Teilbereichs der Bahn (20) angeordnet ist, welche Abführeinrichtung (24) dazu ausgebildet ist, von den Lebensmitteln stammende, insbesondere beim Aufschneiden der Lebensmittelprodukte und/oder bei der Handhabung der Portionen (10) entstehende, Verschmutzungen (54) und/oder Fehlportionen oberhalb der Bahn (20) und zumindest zeitweise neben den Teilbereich abzuführen,
**dadurch gekennzeichnet, dass**
die Abführeinrichtung (24) in einem Übergabebereich, in dem Portionen (10) auf die Transportmover (18) gelangen, vorgesehen ist und dass im Übergabebereich die Portionen (10) von einer, insbesondere als Förderband ausgebildeten, Einlegevorrichtung (14) oder von einer Aufschneidevorrichtung an die Transportmover (18) übergeben werden.

2. Vorrichtung nach Anspruch 1,
**dadurch gekennzeichnet, dass**
die Transportmover (18) jeweils für ihren Träger (22) einen Halter (28) umfassen, welcher die Abführeinrichtung (24) umgreift, so dass der Träger (22) oberhalb der Abführeinrichtung (24) angeordnet ist.

3. Vorrichtung nach einem der vorhergehenden Ansprüche,
**dadurch gekennzeichnet, dass**
die Abführvorrichtung (24) zu einem aktiven Abführen der Verschmutzungen (54) und/oder Fehlportionen ausgebildet ist.

4. Vorrichtung nach einem der vorhergehenden Ansprüche,
**dadurch gekennzeichnet, dass**
die Abführvorrichtung (24) dazu ausgebildet ist, die Verschmutzungen (54) und/oder Fehlportionen bezüglich der Transportrichtung (T) seitlich neben den Teilbereich der Bahn abzuführen.

5. Vorrichtung nach einem der vorhergehenden Ansprüche,
**dadurch gekennzeichnet, dass**
die Abführvorrichtung (24) eine Fördervorrichtung umfasst, vorzugsweise ein Förderband (25), wobei insbesondere die Förderrichtung (F) des Förderbands (25) rechtwinklig oder schräg zur Transportrichtung (T) verläuft.

6. Vorrichtung nach Anspruch 5,
**dadurch gekennzeichnet, dass**
dass die Fördervorrichtung ein Förderband (25) umfasst, das rechtwinklig oder schräg zur Transportrichtung (T) und durch einen Spalt (56) hindurch verläuft, der im Transportbetrieb zwischen der Bahn (20) und dem Läufer vorhanden ist, insbesondere zwischen einer Unterseite des Läufers und der Oberseite eines Motorgehäuses des Bahnsystems.

7. Vorrichtung nach einem der vorhergehenden Ansprüche,
**dadurch gekennzeichnet, dass**
die Abführvorrichtung (24) eine bewegbare, insbesondere drehbare, Abdeckung (32) umfasst.

8. Vorrichtung nach Anspruch 7,
**dadurch gekennzeichnet, dass**
die Abdeckung (32) flächig und/oder scheibenförmig ausgebildet ist und/oder dass
die Abdeckung (32) eine zumindest im Wesentlichen ebene Abdeckfläche umfasst.

9. Vorrichtung nach Anspruch 1 oder 2,
**dadurch gekennzeichnet, dass**
die Abführvorrichtung (24) eine stationäre Abdeckung (38) mit einer neben den Teilbereich der Bahn (20) führenden Abführschräge (40) umfasst.

10. Vorrichtung nach einem der vorhergehenden Ansprüche,
**dadurch gekennzeichnet, dass**
die Abführeinrichtung (24) dazu ausgebildet ist, eine zum Übergeben von Portionen (10) an die Transportmover (18) dienende Einlegevorrichtung (14) aus einer Übergabestellung in eine Abführstellung zu bewegen.

11. Vorrichtung nach einem der vorhergehenden Ansprüche,
**dadurch gekennzeichnet, dass**
die Abführeinrichtung (24) derart ausgebildet ist, dass der Teilbereich der Bahn (20) zumindest zeitweise neben einem Abführbereich (46) für die Verschmutzungen (54) und/oder Fehlportionen verläuft.

12. Vorrichtung nach einem der vorhergehenden Ansprüche,
**dadurch gekennzeichnet, dass**
die Transportmover (18) jeweils einen zumindest zeitweise seitlich auskragenden und in den Übergabebereich hineinragenden Träger (22) umfassen.

13. Verfahren zum Bewegen von Portionen (10), die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen,
bei dem die Portionen (10) mittels einer Mehrzahl individuell bewegbarer Transportmover (18) bewegt werden, die mittels einer Steuereinrichtung in einem Bahnsystem entlang wenigstens einer vorgegebenen Bahn (20) bewegt werden, und
bei dem zumindest ein, insbesondere verschmutzungsgefährdeter, Teilbereich der Bahn (20) vor von den Lebensmitteln stammenden, insbesondere beim Aufschneiden der Lebensmittelprodukte und/oder bei der Handhabung der Portionen (10) entstehenden, Verschmutzungen (54) und/oder Fehlportionen geschützt wird, indem die Verschmutzungen (54) und/oder Fehlportionen mittels einer Abführeinrichtung (24) zumindest zeitweise neben den Teilbereich abgeführt werden, wobei die Abführeinrichtung (24) eine zusätzlich zu der Bahn (20) vorgesehene Abführvorrichtung umfasst, die zumindest zeitweise oberhalb des Teilbereichs der Bahn (20) angeordnet ist.

## Claims

1. An apparatus for moving portions (10) which each comprise at least one slice cut off from a food product, in particular by means of a slicing apparatus, in particular by means of a high-speed slicer,
having a plurality of individually movable transport movers (18) for the transport of portions (10);
having a path system for the transport movers (18) in which the transport movers (18) are movable in a transport direction (T) along at least one predefined path (20); and
having a control device for controlling the movements of the transport movers (18) in the path system,
wherein the transport movers (18) each comprise at least one rotor cooperating with the path system and at least one carrier (22) for portions (10) attached to the rotor,
wherein a disposal device (24) is provided for at least one part region of the path (20), in particular a part region at risk of contamination, and wherein the disposal device (24) comprises a disposal apparatus which is provided in addition to the path (20) and which is arranged above the part region of the path (20) at least at times, which disposal device (24) is configured to dispose of contaminants (54) and/or incorrect portions originating from the foods, in particular on the slicing of the food products and/or on the handling of the portions (10), above the path (20) and next to the part region at least at times,
**characterized in that**
the disposal device (24) is provided in a transfer region in which portions (10) move onto the transport movers (18); and **in that** the portions (10) are transferred in the transfer region from an insertion apparatus (14), in particular configured as a conveyor belt, or from a slicing apparatus to the transport movers (18).

2. An apparatus in accordance with claim 1,
**characterized in that**
the transport movers (18) each comprise a holder (28) for their carrier (22), said holder (28) engaging around the disposal device (24) so that the carrier (22) is arranged above the disposal device (24).

3. An apparatus in accordance with one of the preceding claims,
**characterized in that**
the disposal apparatus (24) is configured for an active disposal of the contaminants (54) and/or incorrect portions.

4. An apparatus in accordance with any one of the preceding claims,
**characterized in that**
the disposal apparatus (24) is configured to dispose of the contaminants (54) and/or incorrect portions laterally next to the part region of the path with respect to the transport direction (T).

5. An apparatus in accordance with any one of the preceding claims,
**characterized in that**
the disposal apparatus (24) comprises a conveying apparatus, preferably a conveyor belt (25), with the conveying direction (F) of the conveyor belt (25) in particular extending at a right angle or obliquely to the transport direction (T).

6. An apparatus in accordance with claim 5,
**characterized in that**
the conveying apparatus comprises a conveyor belt (25) which extends at a right angle or obliquely to the transport direction (T) and through a gap (56) which is present between the path (20) and the rotor in transport operation, in particular between a lower side of the rotor and the upper side of a motor housing of the path system.

7. An apparatus in accordance with any one of the preceding claims,
**characterized in that**
the disposal apparatus (24) comprises a movable, in particular rotatable, cover (32).

8. An apparatus in accordance with claim 7,
**characterized in that**
the cover (32) is areal and/or of disk shape;
and/or **in that**
the cover (32) comprises an at least substantially planar cover surface.

9. An apparatus in accordance with claim 1 or claim 2,
**characterized in that**
the disposal apparatus (24) comprises a stationary cover (38) having a disposal slope (40) leading next to the part region of the path (20).

10. An apparatus in accordance with any one of the preceding claims,
**characterized in that**
the disposal device (24) is configured to move an insertion apparatus (14) serving for the transfer of portions (10) to the transport movers (18) from a transfer position into a disposal position.

11. An apparatus in accordance with any one of the preceding claims,
**characterized in that**
the disposal device (24) is configured such that the part region of the path (20) extends next to a disposal region (46) for the contaminants (54) and/or incorrect portions at least at times.

12. An apparatus in accordance with any one of the preceding claims,
**characterized in that**
the transport movers (18) each comprise a carrier (22) protruding laterally at least at times and projecting into the transfer region.

13. A method of moving portions (10) which each comprise at least one slice cut off from a food product, in particular by means of a slicing apparatus, in particular by means of a high-speed slicer,
in which the portions (10) are moved by means of a plurality of individually movable transport movers (18) which are moved along at least one predefined path (20) in a path system by means of a control device; and in which at least one part region of the path (20), in particular a part region at risk of contamination, is protected against contaminants (54) and/or incorrect portions originating from the foods, in particular arising on the slicing of the food products and/or on the handling of the portions (10), in that the contaminants (54) and/or incorrect portions are disposed of next to the part region by means of a disposal device (24) at least at times, wherein the disposal device (24) comprises a disposal apparatus which is provided in addition to the path (20) and which is arranged above the part region of the path (20) at least at times.

## Revendications

1. Dispositif pour déplacer des portions (10) qui comprennent chacune au moins une tranche séparée d'un produit alimentaire, en particulier à l'aide d'un dispositif de coupe, en particulier d'une trancheuse à haute vitesse, comportant
une pluralité d'organes de transport (18) mobiles individuellement pour transporter des portions (10),
un système de voie pour les organes de transport (18), dans lequel les organes de transport (18) sont mobiles le long d'au moins une voie prédéterminée (20) dans une direction de transport (T), et
un moyen de commande pour commander les mouvements des organes de transport (18) dans le système de voie,
dans lequel
les organes de transport (18) comprennent chacun au moins un curseur coopérant avec le système de voie et au moins un support (22) monté sur le curseur et destiné aux portions (10),
il est prévu un moyen d'évacuation (24) pour au moins une zone partielle de la voie (20) qui est en particulier sujette à l'encrassement,
le moyen d'évacuation (24) comprend un dispositif d'évacuation prévu en supplément à la voie (20), qui est agencé au moins temporairement au-dessus de la zone partielle de la voie (20),
le moyen d'évacuation (24) est réalisé pour évacuer jusqu'au-dessus de la voie (20) et au moins temporairement jusqu'à côté de la zone partielle des encrassements (54) issus des produits alimentaires, se formant en particulier lors de la coupe des produits alimentaires et/ou lors de la manipulation des portions (10), et/ou des portions imparfaites,
**caractérisé en ce que**
le moyen d'évacuation (24) est prévu dans une zone de remise dans laquelle des portions (10) parviennent sur les organes de transport (18), et **en ce que**
dans la zone de remise, les portions (10) sont remises aux organes de transport (18) depuis un dispositif d'insertion (14), réalisé en particulier sous forme de bande de convoyage, ou depuis un dispositif de coupe.

2. Dispositif selon la revendication 1,
**caractérisé en ce que**
les organes de transport (18) comprennent chacun un élément de maintien (28) pour leur support (22), qui entoure le moyen d'évacuation (24), de sorte que le support (22) est agencé au-dessus du moyen d'évacuation (24).

3. Dispositif selon l'une des revendications précédentes,
**caractérisé en ce que**
le dispositif d'évacuation (24) est réalisé pour une évacuation active des encrassements (54) et/ou des portions imparfaites.

4. Dispositif selon l'une des revendications précédentes,
**caractérisé en ce que**
le dispositif d'évacuation (24) est réalisé pour évacuer les encrassements (54) et/ou les portions imparfaites latéralement à côté de la zone partielle de la voie, par rapport à la direction de transport (T).

5. Dispositif selon l'une des revendications précédentes,
**caractérisé en ce que**
le dispositif d'évacuation (24) comprend un dispositif de convoyage, de préférence une bande de convoyage (25), la direction de convoyage (F) de la bande de convoyage (25) s'étendant en particulier à angle droit ou en oblique par rapport à la direction de transport (T).

6. Dispositif selon la revendication 5,
**caractérisé en ce que**
le dispositif de convoyage comprend une bande de convoyage (25) qui s'étend à angle droit ou en oblique par rapport à la direction de transport (T) et à travers une fente (56) qui se présente pendant le fonctionnement de transport entre la voie (20) et le curseur, en particulier entre une face inférieure du curseur et la face supérieure d'un carter de moteur du système de voie.

7. Dispositif selon l'une des revendications précédentes,
**caractérisé en ce que**
le dispositif d'évacuation (24) comprend un recouvrement (32) mobile, en particulier mobile en rotation.

8. Dispositif selon la revendication 7,
**caractérisé en ce que**
le recouvrement (32) est réalisé sous forme surfacique et/ou en forme de disque, et/ou **en ce que**
le recouvrement (32) comprend une surface de recouvrement au moins sensiblement plane.

9. Dispositif selon la revendication 1 ou 2,
**caractérisé en ce que**
le dispositif d'évacuation (24) comprend un recouvrement stationnaire (38) pourvu d'une pente d'évacuation (40) dirigée à côté de la zone partielle de la voie (20).

10. Dispositif selon l'une des revendications précédentes,
**caractérisé en ce que**
le moyen d'évacuation (24) est réalisé pour déplacer un dispositif d'insertion (14), servant à la remise de portions (10) aux organes de transport (18), depuis une position de remise jusque dans une position d'évacuation.

11. Dispositif selon l'une des revendications précédentes,
**caractérisé en ce que**
le moyen d'évacuation (24) est réalisé de telle sorte que la zone partielle de la voie (20) s'étend au moins temporairement à côté d'une zone d'évacuation (46) pour les encrassements (54) et/ou pour les portions imparfaites.

12. Dispositif selon l'une des revendications précédentes,
**caractérisé en ce que**
les organes de transport (18) comprennent chacun un support (22) qui fait saillie latéralement au moins temporairement et qui pénètre dans la zone de remise.

13. Procédé pour déplacer des portions (10) qui comprennent chacune au moins une tranche séparée d'un produit alimentaire, en particulier à l'aide d'un dispositif de coupe, en particulier d'une trancheuse à haute vitesse, dans lequel
les portions (10) sont déplacées à l'aide d'une pluralité d'organes de transport (18) mobiles individuellement, qui sont déplacés le long d'au moins une voie prédéterminée (20) dans un système de voie à l'aide d'un moyen de commande, et
une zone partielle de la voie (20) qui est en particulier sujette à l'encrassement est protégée contre des encrassements (54) issus des produits alimentaires, se formant en particulier lors de la coupe des produits alimentaires et/ou lors de la manipulation des portions (10), et/ou contre des portions imparfaites, du fait que les encrassements (54) et/ou les portions imparfaites sont évacués à l'aide d'un moyen d'évacuation (24) au moins temporairement jusqu'à côté de la zone partielle, le moyen d'évacuation (24) comprenant un dispositif d'évacuation qui est prévu en supplément à la voie (20) et qui est agencé au moins temporairement au-dessus de la zone partielle de la voie (20).
